# EUROPEAN PATENT APPLICATION

(11) **EP 2 869 215 A1**
(43) Date of publication of application: **06.05.2015**
(21) Application number: 13306499.8
(22) Date of filing: 31.10.2013
(51) Int. Cl.: G06F 17/30

(54) **TILE-BASED GRAPHICAL EXPLORATION OF COLLECTIONS OF OBJECTS**

(71) Applicant: Hewlett-Packard Development Company, L.P., Houston, TX 77070 (US)
(72) Inventor: PICARD, Jean-Charles, 06901 SOPHIA-ANTIPOLIS (FR)
(74) Representative: Delumeau, François Guy

(57) **Abstract**

Tile-based graphical exploration of a collection of objects uses a manager device and method wherein when a user selects a predetermined navigation path a first results level (31) of an explorer graphic (TBN_GE) is displayed comprising a first set of graphical tiles (RT₁) representing objects of a type defined by the navigation path for a first stage of navigation. When the user selects an object represented by a graphical tile displayed at a given results level (31-33) of the explorer graphic, a portion of the graphic is expanded by adding, at the next results level (32-34) of the graphic, a further set of graphical tiles (RT₂-RT₄) representing objects inter-related to the selected object by a relation specified in the first predetermined navigation path for this stage of navigation; the further graphical tiles are displayed adjacent to the graphical tile representing the selected object. The objects for the successive results level (31-34) are identified by querying the object collection Based on the predetermined navigation path and user selections.

## Description

### BACKGROUND

There are many contexts and applications in which a user may wish to visualize and explore a collection of data relating to objects that are inter-related according to certain relations, for example, a collection of data organized in a relational database.

Various graphical representations and interfaces have been proposed to enable user access to data collections, notably for searching and for performing data analysis. Some known interfaces are based on graphical display of a data table listing data relating to the objects. Some other known interfaces present the object data using a tree structure, and display different numbers of hierarchical levels of the tree structure according to user selections.

Nowadays, some graphical interfaces use graphical tile elements to represent applications that a user can select to launch.

### BRIEF DESCRIPTION OF THE DRAWINGS

Manager devices and management methods of tile-based explorer graphics, for user exploration of a collection of objects, according to some examples of the invention will now be described, by way of illustration only, with reference to the accompanying drawings.
Fig.1 is a diagram illustrating an example of part of a collection of objects;
Fig.2 illustrates an example of a screen display allowing a user to select a predetermined navigation path;
Figs.3A to 3E show an example of a series of screen displays illustrating successive views of an explorer graphic (shown in a generalized format) at successive stages in exploration of an object collection;
Fig.4 is an example of a variant displayed image resulting from user exploration of the object collection in Fig.3 according to a different series of user selections than those producing the Fig.3E display screen;
Fig.5 is a first example of an explorer graphic implementing the generalized format of Fig.3 in the context of exploration of an example object collection in an SLA management application;
Fig.6 is a compact representation of the explorer graphic of the Fig.5 example, with collapsed portions;
Fig.7 is a diagram schematically illustrating components of an example of a manager device of a tile-based explorer graphic;
Fig.8 illustrates an example of a manager device of a tile-based explorer graphic, implemented using a processor and a computer-readable storage medium; and
Fig.9 is a flowchart of an example method of managing a tile-based, explorer graphic for user exploration of a collection of objects.

### DETAILED DESCRIPTION

Known systems that enable a user to interact with a collection of data relating to objects that are inter-related according to certain relations tend to overwhelm the user with data or, when the presentation of the objects to the user is controlled with the aim of reducing the complexity or amount of presented data, tend to filter the collection of data and display only objects selected according to the filtering criteria.

Examples described below relate to tile-based graphical exploration of a collection of objects according to techniques which control the amount and complexity of data presented to a user while preserving context. Exploration is not explicitly linked to a model but rather on a logical relationship that does not require knowledge of a database in which the collection of data may be organized. The management and exploration of the collection of objects is simplified, notably for a user lacking technical training.

Furthermore, certain examples described below enable a reduction of the time interval between a user selection and the corresponding update of the object data displayed to the user in response to the selection.

Furthermore, certain examples described manage exploration in a collection of objects in a manner which makes it possible to accommodate a variety of display devices having different display capabilities.

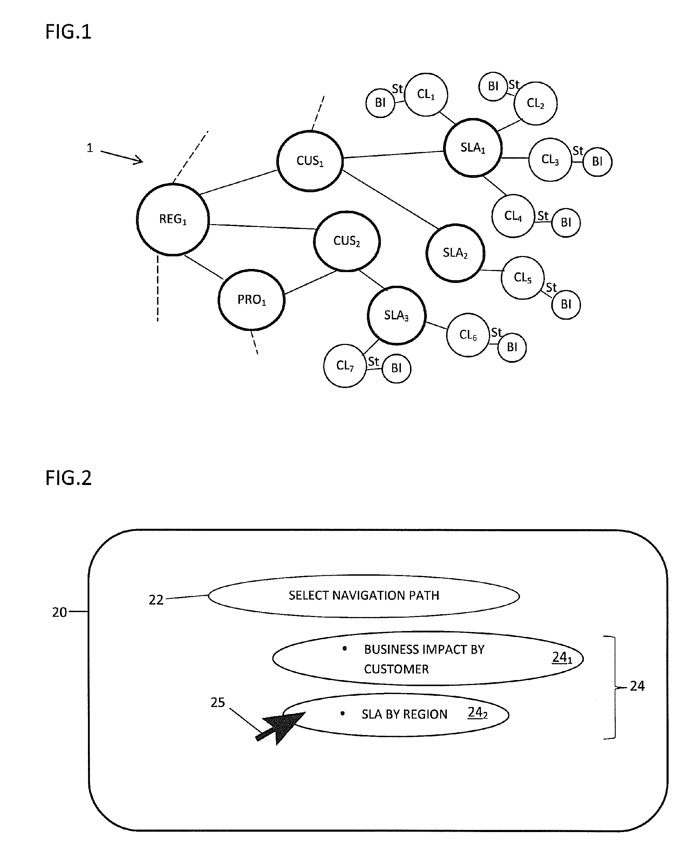

The exploration techniques of the examples discussed below may be applied to collections of objects in which relations exist between different objects in the collection. Fig.1 illustrates an example of part of a collection of such a type.

According to the example of Fig.1, the collection of objects is one that is used by a management system which manages service level agreements (SLAs) and, in particular, monitors compliance with service level agreements. Fig.1 represents only a part of the collection of objects and only some of the relations between objects. In this example, an object REG₁ represents an identified geographical region, an object PRO₁ represents a service-provider, two objects CUS₁ and CUS₂ represent two customers, and the service-provider PRO₁ and customers CUS₁ and CUS₂ are located in the geographical region represented by object REG₁.

In the example of Fig.1, two objects SLA₁ and SLA₂ represent two service level agreements which define levels of service that are supposed to be provided to customer CUS₁. In a similar way, object SLA₃ represents a service level agreement that defines levels of service that are supposed to be provided to customer CUS₂. Objects CL₁ to CL₄ represent different clauses of the service level agreement SLA₁. Object CL₅ represents a clause of the service level agreement SLA₂. Objects CL₆ and CL₇ represent different clauses of the service level agreement SLA₃. There may be a business impact BI if a given clause of a service level agreement is not complied with. In this particular example, the management system monitors the status St of each clause in the service level agreements and, in particular, monitors how the compliance status of the various clauses in the service level agreements varies over time. Typically, the business impact of non-compliance with a clause in a service level agreement may be calculated in terms of a monetary value (e.g. representing a financial penalty arising from failure to provide the agreed level of service).

Management devices and methods according to certain examples of the invention provide a tile-based explorer, in graphical form, enabling a user to explore a collection of objects. Although these management devices and methods may be provided as standalone tools dedicated to the exploration of a collection of objects, they may (and often will) be provided in association with or as part of a software application that makes use of a collection of objects, so that the relevant software application can provide a user with the opportunity of exploring the collection of objects.

The examples described below relate to explorer-graphic management devices and methods that are applied as part of an SLA management software application which refers to a collection of objects having components of the sort illustrated in the example of Fig.1. However, it is to be understood that examples of explorer-graphic management devices and methods according to the invention may be applied in other contexts.

In the examples below there are a number of predetermined navigation paths through the collection of objects, for example paths that are pre-defined by suitable programming of a processor that controls generation and management of the tile-based explorer, with the programming typically being performed by the application designer or administrator.

In a management device and method according to an example of the invention, when the user starts a n explorer window the user is first presented with a display, on a screen 20, of a collection of image elements enabling him to choose one of the navigation paths that has been predetermined for this collection of objects.

Fig.2 illustrates an example of a navigation-path selection screen. In the example of Fig.2, a first image element 22 indicates to the user how he should interact with this screen (notably, by selecting a navigation path) and there is a displayed list 24 of the different navigation paths that have been predetermined for this collection of objects. In this example, a first image element 24₁ corresponds to a first predetermined navigation path which allows the user to explore the object-collection by looking at the business impact of non-compliance with clauses of SLAs, by customer. In this example, a second image element 24₂ corresponds to a second predetermined navigation path which allows the user to explore the object-collection by looking at the SLAs by geographical region. Fig.2 illustrates a user-controlled cursor 25 positioned over the second image element 24₂.

The predetermined navigation paths define the starting point, the ending point and way of exploring the data and objects at several levels. In the examples below the navigation path is defined based on possible navigation that is available from the SLA model and the relationship between objects (e.g. SLA, customer, provider, supplier, service SLA, clause, business impact value). The navigation path can be seen as a list defining the type of objects that represent the first stage in the navigation, as well as defining a sequence of relations that should hold between the objects that result from each of the successive stages in the navigation. The navigation path can also specify an operator and its value (e.g. business impact ≥ $10,000) and in a way return a filtered result.

The examples discussed below assume that the user operates a selection device (e.g. clicks a mouse when the cursor 25 is positioned over the second image element 24₂ in Fig.2) to select exploration of the object-collection according to the predetermined navigation path which explores SLAs by geographical region.

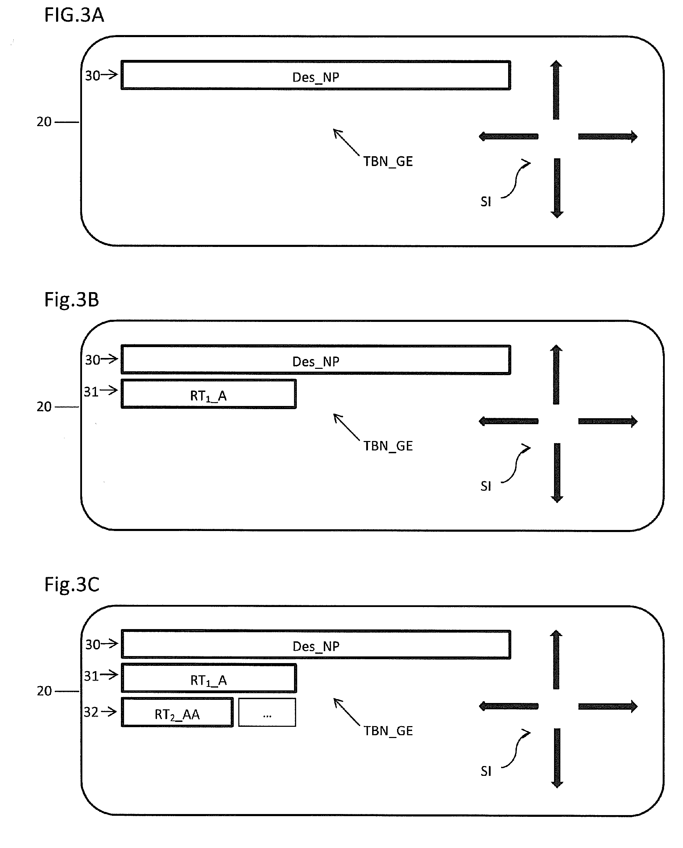

Figs.3A to 3E illustrate successive stages in a user's exploration of an object collection using a tile-based explorer graphic that is shown here displayed, according to a generalized format, on a display screen 20. In this example the successive stages of the user's exploration of the object collection are guided by the predetermined navigation path selected on a selection screen of the type illustrated in Fig.2.

In the example of Figs.3A to 3E an explorer graphic TBN_GE is displayed, as well as a scrolling interface SI which indicates that the user can scroll the displayed explorer graphic to the left, right, up and down relative to the display screen 20. The scrolling may be commanded in different ways, notably depending on the device on which the explorer graphic is displayed and, for example, can make use of a user-operated input device (e.g. a keyboard, mouse, trackball, and so on), can employ a touch screen, and so on.

According to the example of Figs.3A to 3E, the explorer graphic TBN_GE comprises a navigation path bar 30 which includes a label (shown as Des_NP in Figs.3A to 3E) to remind the user of the nature of the predetermined navigation path that the user has selected to guide the user's exploration of the object-collection (in this example Des_NP could be the character string "explore SLAs by geographical region"). In the example illustrated in Fig.3A, when the user has interacted with the display screen illustrated in Fig.2 to select the predetermined navigation path 24₁ for exploration of SLAs by geographical region, first of all only a portion of the explorer graphic TBN_GE is displayed, this portion corresponding to the navigation path bar 30.

In the present example, when the user selects the navigation path bar 30 on a display screen as in Fig.3A, the explorer graphic TBN_GE is expanded to add results of a first stage of navigation according to the predetermined navigation path. In the present example the predetermined navigation path specifies that the first stage of navigation should lead the user to objects of a specified type in the object collection. Objects in the object collection that have the specified object type are identified (e.g. by querying the object collection, as described below) and display data is generated for displaying graphical tiles corresponding to the identified objects. These graphical tiles represent the results of the first stage of navigation.

As illustrated in Fig.3B, the graphical tiles that represent the results of the first stage of navigation are displayed in a region 31 of the explorer graphic that is adjacent to the navigation path bar 30.

Fig.3B shows a single graphical tile RT₁_A displayed in the first-stage results region 31. However, graphical tiles may be generated, and displayed in the first-stage results region 31, in respect of all of the objects in the object-collection that have been identified as having the specified object type, or in respect of a sub-set of the identified objects (e.g. in respect of a restricted number of the identified objects, for example, a predetermined number, a number which varies dependent on the space available to display the graphical tiles, or a number which varies dependent on other factors).

Let us assume that the user wishes to explore the object represented by the graphical tile RT₁_A displayed in the first-stage results area 31 of the explorer graphic illustrated in Fig.3B. The user may indicate this desire by selecting the tile RT₁_A of the displayed explorer graphic in any convenient manner, e.g. by touching the tile RT₁_A when display screen 20 is a display screen, by positioning a cursor and clicking using a mouse, etc. The predetermined navigation path specifies what should result from selection of an object that is represented by a graphical tile displayed in the first-stage results region 31. For example, the navigation path may specify a relation that should hold between the object represented by the tile RT₁_A in the first-stage results region 31 and the objects to be displayed to the user as a result of the selection.

As illustrated in Fig.3C, the graphical tile(s) that represent the objects identified as a result of the user's selection of an object in the first-stage results region 31 are displayed in a second-stage results region 32 of the explorer graphic TBN_GE. In this example, the results that are displayed in the second-stage results region 32 are displayed adjacent to the tile RT₁_A whose selection produced these results. In this example, the second-stage results correspond to plural objects represented using graphical tiles RT₂_AA and so on.

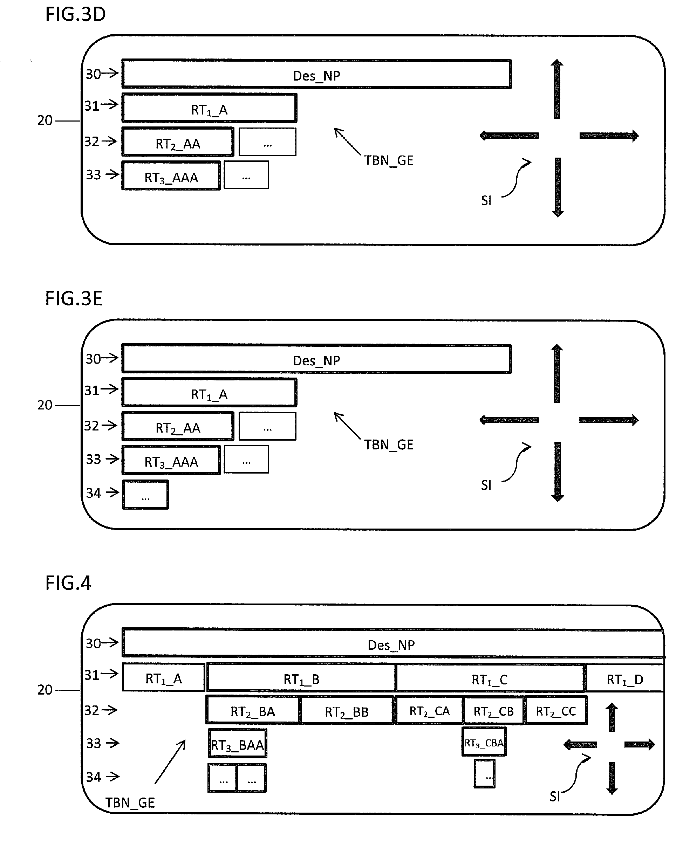

In a similar way, Figs.3D and 3E illustrate examples of how the explorer graphic may be expanded as a result of the user selecting for exploration, the graphical tile RT2_AA shown in Fig.3C and then a graphical tile RT2_AAA illustrated in Fig.3E.

In the example of Figs.3a to 3E the user has chosen to explore objects represented using displayed tiles at successively deeper results levels in the explorer graphic. However, management devices and methods according to examples of the invention are flexible having regard to the user exploration and, for example, the user can choose to expand a first portion of the explorer graphic branching from a first displayed tile and then to expand a second (third, fourth, etc.) portion of the explorer graphic branching from another displayed tile.

Thus, Fig.4 illustrates an example in which a user's selection of a predetermined navigation path has led to display of graphical tiles (RT₁_A to RT₁_D) representing four objects and the user has subsequently chosen to explore the object collection along the predetermined navigation path starting from the object represented by the tile RT₁_B, as well as choosing to explore the object collection along the predetermined navigation path starting from the object represented by the tile RT₁_C.

It may be considered that the explorer graphic TBN_GE illustrated in the example of Figs.3A to 3E, and in the example of Fig.4, comprises a navigation path element (bar 30) and a results area (made up of the results regions 31 to 35). It is noteworthy that management devices and methods configured to manage exploration according to these examples of the invention generate an explorer graphic in which the user's selections expand the displayed information according to a selected navigation path while still displaying the selected objects at stages that are closer to the root of the portion that is currently being expanded. These management devices and methods also generate an explorer graphic in which non-selected objects which have not been expanded are nevertheless still displayed. Thus, the user can visualize not only the portion of the object collection that he has selected for expansion, he can also visualize the context of the expanded portion.

In the example illustrated in Figs.3A to 3E, the objects that the user has selected during his exploration of the object collection are highlighted in the explorer graphic by displaying the tile bold perimeter in bold (or using any other convenient visual highlighting of the selected graphical tiles).

Each level of the explorer graphic may have a special colour or graphical effect to help distinguish graphical tiles of this level from those of another level. Additionally or alternatively, graphical tiles representing objects that have an associated status may have colour or other graphical effect that indicates the status of the relevant object, notably the status at the current time. In some examples, the graphical effects assigned to graphical tiles representing objects at certain results levels in the explorer graphic are hard-coded (e.g. defined in the definition of the predetermined navigation path) while others are allowed to vary, for example, to reflect the value of an associated status or other dynamic property.

Typically, the graphical tiles are labelled with associated information, for example with the name of the object that the tile represents. It is convenient to display such information on the graphical representation of the tile. However, other approaches may be used instead or as well. For example, the management device or method managing the tile-based exploration may be configured such that a pop-up window displaying details associated with an object appears when the user performs some triggering action on the graphical tile representing the object (for example, when the user hovers a cursor/pointer over the graphical tile, when the user double-clicks or double-taps on the tile, and so on). The information displayed on (or in association with) a tile is not limited simply to the object's name; object properties, status and so forth may be displayed. For example, in the case of an object corresponding to a clause of an SLA, a triggering action may cause display of raw data that is used to compute whether or not the provided service level has been met over the compliance period.

In some examples, when the user hovers a cursor (or other pointer) over a particular graphical tile in the explorer graphic a tooltip may appear to inform the user of the number of results at this location.

In the example illustrated in Figs.3A to 3E, the objects resulting from the user's explorations at different stages (or levels) of the predetermined navigation path are displayed using graphical tiles arranged in groups in results regions which are positioned at different distances away from the navigation path bar. In the example illustrated in Figs.3A to 3E, the navigation path bar 30 is an elongate element extending across the widthwise direction of the display screen 20 and the results regions 31-35 at successive stages of navigation according to the predetermined navigation path are positioned at progressively greater distances from the navigation path bar 30 in the heightwise direction of the display screen. However, other spatial arrangements may be used.

For example, the navigation path bar may be an elongate element extending in the heightwise direction of the display screen 20, with the successive results regions arranged progressively further away from the navigation path bar in the widthwise direction of the display screen and, if desired, other arrangements may be used in which the navigation path bar extends in an oblique direction relative to the display screen and the direction between successive results regions is substantially perpendicularly to that oblique direction. As another example, the navigation path may be represented using a graphical element of freely-chosen shape (advantageously displayed near the centre of the display screen) and the results of successive navigation stages in the object collection may be displayed at positions that are progressively further outward of the graphical element representing the navigation path.

The user's intuitive understanding of the relationships between the objects in the explored object collection may be enhanced by controlling the dimensions of the displayed graphical tiles. For example, when a user selects a tile RTₘ_n (i.e. a graphical tile representing the nth object displayed at an m^{th} results stage) of the explorer graphic, and a number x of graphical tiles are used to display the results of this exploration, in a results region for the (m+1)^{th} stage of navigation, the dimensions of the tiles may be controlled so that the overall set of x graphical tiles extends over a distance that matches a dimension of the graphical tile RTₘ_n. For example, when the explorer graphic uses a spatial arrangement of tiles of the kind illustrated in Figs.3A to 3E, it may be helpful to control the width of the x tiles of the (m+1)th results region so that the overall width of the set of x tiles matches the width of the tile RTₘ_n or is controlled not to exceed the width of the tile RTm_n. Of course, if the navigation path element and graphical tiles of the explorer graphic are displayed using a spatial arrangement different from that used in Figs.3A to 3E, then it may be appropriate to control a dimension of the tiles different from width.

Management devices and methods according to certain examples of the invention control the displaying of the graphical tiles with a view to improving visualization of the information associated with the tiles. For example, the number and/or dimensions of results tiles that are displayed when an object is selected for exploration may be controlled in order to satisfy any desired criteria including (but not limited to): ensuring that all the tiles selected for inclusion in the explorer graphic can be displayed on the display screen 20 at the same time, ensuring that the graphical tiles have a size that is at least equal to a lower threshold value (to ensure the tile information can be read), and so on. This control of the displaying of graphical tiles can be implemented in a dynamic fashion such that, for example, the number and/or dimensions of results tiles selected for display may be changed as the user explores other parts of the object collection. As another example, the graphical tiles may be set to have a variable minimum width that depends on the length of a label or some information that is to be displayed on the tile.

In a similar way, as the user explores the object collection the dimensions of tiles that are already displayed in the explorer graphic may be adjusted with a view to producing an updated graphic which presents the displayed data in a manner which is intuitively meaningful to the user. Thus, for instance, in the example illustrated in Fig.4, the width of the navigation path bar 30 and the widths of the results tiles in the first-level results region 31 have been increased as the user has expanded portions of the explorer graphic branching from tiles RT₁_B and RT₁_C, to ensure that results tiles in the expanded portions can be displayed with a width at least equal to a minimum size (to ensure readability of the associated tile information). In the example according to Fig.4 this increase in the width of the navigation path bar 30 and of the first-level tiles has led to the situation where only part of the explorer graphic TBN_GE fits into the display area of the display screen 20. However, if he wishes the user may implement scrolling to bring into view the right-hand portion of the explore graphic that is not visible in Fig.4.

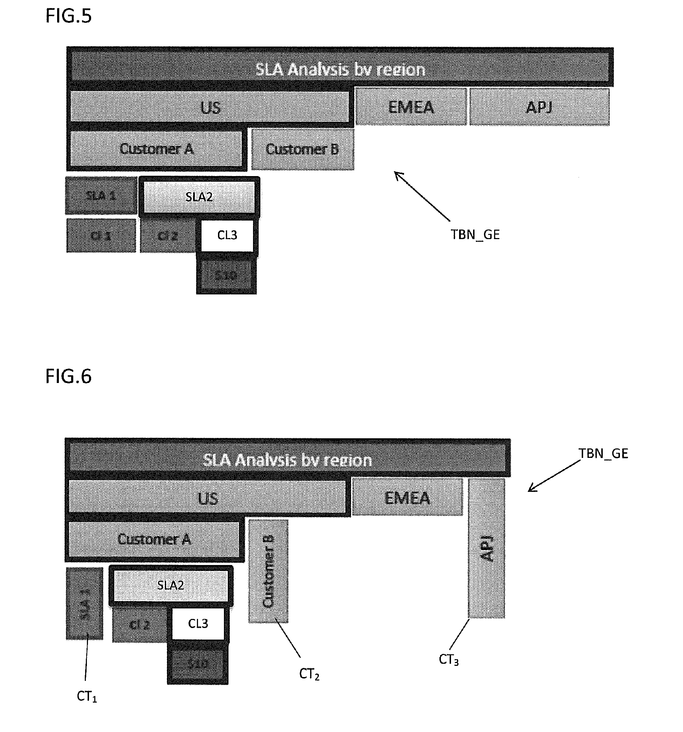

The examples of Figs.3A to 3e and Fig.4 represent generic graphical tiles unrelated to any specific type of object collection. Figs.5 and 6 will now be described which provide examples of tile-based navigation in an object collection used in an SLA management application.

Figs.5 and 6 illustrate examples in which a user explores an object collection used by an SLA management application, according to a predetermined navigation path which explores SLAs by geographical region. In this example, the predetermined navigation path specifies that the first-level results of navigation are objects of object type "geographical region". In this example the object collection has three objects corresponding to geographical regions; a first object corresponding to the US, a second object corresponding to the geographical region Europe, Middle East and Africa (labelled EMEA in Figs.5 and 6), and a third object corresponding to the geographical region Asia, Pacific and Japan (labelled APJ in Figs.5 and 6). Accordingly, when the user selects the navigation path bar, graphical tiles are displayed just below, representing the three geographical region objects identified in the object collection.

In the example of Figs.5 and 6, the predetermined navigation path specifies that the second-level results of navigation are objects of object type "customer" that have a relation to the specific object that the user selects in the first-level navigation results. Fig.5 illustrates the case where the user has selected the US region in the first-level results and so obtains display of graphical tiles representing the customers in the object collection that are related to the US region. In this example there are 2 relevant customers, customer A and customer B.

In the example of Figs.5 and 6, the predetermined navigation path specifies that the third-level results of navigation are objects of object type "SLA" that have a relation to the specific object that the user selects in the second-level navigation results. Fig.5 illustrates the case where the user has selected Customer A in the first-level results and so obtains display of graphical tiles representing the SLAs in the object collection that are related to the customer A in the US region. In this example there are 2 relevant SLAs, designated SLA₁ and SLA₂.

In the example of Figs.5 and 6, the predetermined navigation path specifies that the fourth-level results of navigation are objects of object type "SLA clause" that have a relation to the specific object that the user selects in the third-level navigation results. Fig.5 illustrates the case where the user has selected SLA1 in the third-level results (and so obtains display of a graphical tile CL1 representing the clause of the SLA1 that is related to customer A in the US region) and has also selected SLA2 in the third-level results (and so has added to the explorer graphic graphical tiles CL2 and CL3 representing the clauses of the SLA2 that is related to customer A in the US region).

In the example of Figs.5 and 6 the predetermined navigation path specifies that the fifth-level results of navigation are to represent the business impact of failure to provide the service level specified in an SLA clause selected in the fourth-level results. Fig.5 illustrates the case where the user has selected the clause CL3 in the fourth-level results and so obtains display of the business impact (in monetary terms) of breaching the clause CL3. The explore graphic may be managed so that selection of an SLA clause causes display of a graphical tile showing the business impact of the currently-applicable status of the selected SLA clause. Graphical tiles representing SLA clauses (and/or graphical tiles representing the business impact of the current status and/or graphical tiles representing the status explicitly) may be displayed with a graphical effect that indicates the status, for example: by analogy with a traffic light, if an SLA clause is breached the colour red may be used, if the status is "on target" the colour green may be used, if the status corresponds to the case where there is a risk of breach the colour orange may be used - the colour blue (or another colour) may be used if the specified service level has been exceeded.

Management devices and methods managing tile-based exploration according to examples of the invention may provide a function of enabling tiles, or expanded portions of the explorer graphic to be collapsed, for example in response to a user action or according to a rule that is applied automatically. For example, expanded portions of the explorer graphic, or individual graphical tiles, may be collapsed when the user performs a triggering action, such as to click a second time on a tile (to deselect it), when the user selects a different tile in the same results-level as the root of an expanded portion, and so forth. The process of collapsing an expanded portion of the explorer graphic may include removing from the explorer graphic graphical tiles at deeper results levels than the root tile. The process of collapsing an expanded portion of the explorer graphic, or an individual tile, may include changing the orientation of the (root) tile, notably so as to make the explorer graphic more compact.

Fg.6 illustrates an example in which portions of the explorer graphic of Fig.5 have been collapsed. More particularly, in the example of Fig.6 there is a first collapsed tile CT1, which corresponds to the SLA1 object related to customer A in the US region, a collapsed tile CT2, which corresponds to the customer B in the US region, and a collapsed tile CT3, which corresponds to the Asia, Pacific, Japan region. A comparison of Figs.5 and 6 shows that the collapsing of the tiles CT1 to CT3 has significantly reduced the width of the explorer graphic.

It should be mentioned that the changed orientation of graphical tiles that have been collapsed provides a visual indication to the user that data relating to exploration of this tile has already been obtained (for example by querying a database). If local caching is used the relevant data may be available locally so that the collapsed tile can be re-expanded rapidly.

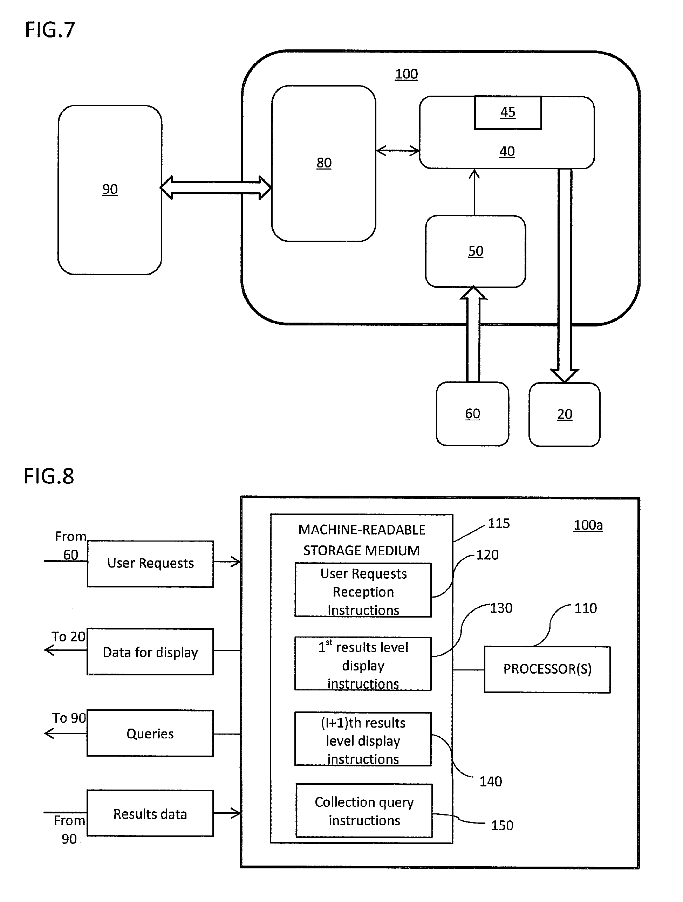

Fig.7 illustrates schematically components of a management device 100 configured to manage tile-based navigation according to an example of the invention, for example, according to the examples discussed above with reference to Figs.1 to 6.

According to the example illustrated in Fig.7, the manager device 100 is configured to manage tile-based graphical exploration of an object collection 90 which is external to the management device 100. In suitable cases the object collection may be integrated into the management device 100. Typically, the object collection will be provided in the form of a relational database. In one particular example, the management device 100 was used to control navigation in an object collection comprised in a database stored on a server external to the management device 100.

According to the example illustrated in Fig.7, the manager device 100 comprises a display controller 40 (here illustrated with an associated memory 45), and a user interface 50 serving as a reception module for receiving user input, notably selections the user makes, using input technology 60 (e.g. pointing devices, touch screen elements, and so on), in relation to graphical elements displayed on a display 20. The memory 45 stores an application program which includes details of the predetermined navigation path or paths available for exploring the object collection 90. The management device 100 also includes a search unit 80 configured to send queries to the object collection (e.g. to query the database) and to return the results of the queries to the display controller 40.

According to the example illustrated in Fig.7, requests needed to explore the objects are done on demand using a lazy loading approach. In other words, when the user selects an object for exploration, the display controller 40 analyses the user input (received via the interface 50) and informs the search unit 80 of the nature of the query to be sent to the object collection 90. The display controller 40 determines the nature of the query that is required in a given case based on the object the user has selected and based on the predetermined navigation path that is being employed. The search unit 80 formulates the query according to the requirements of the object collection (e.g. in terms of syntax), transmits the query to the object collection 80 and processes the returned results.

The search unit 80 may implement a truncation of the search results that are obtained based on the navigation path options, for example the search unit 80 may limit to only a selected number of results. The search unit 80 may be configured so that when it applies a truncation it supplies the display controller with information indicating that truncation has occurred and/or with information indicating the number of results that were obtained before truncation.

The display controller 40 receives the query results from the search unit 80 and may determine whether to display graphical tiles corresponding to all the results or a selected sub-set (in other words, the decision to truncate the search results may be made by the display controller 40 instead of the search unit 80, or the determination made by the display controller 40 may be additional to any truncation decision taken by the search unit 80). The display controller 40 sends image data to the display 20 to cause display of the explorer graphic updated according to the user's selection.

The display controller 40 may be configured to include in the explorer graphic a visual indication that truncation has occurred. For example, in the examples illustrated in Figs.3A to 3E, and Figs.4-6, a graphical tile showing three dots is included in the explorer graphic to indicate the existence, at the indicated position in the relevant results level, of one or more results that have not been displayed. Of course, other visual indications could be used, including but not limited to displaying at the same location graphical tiles bearing different symbols, or bearing information such as an indication of the number of non-displayed results. Moreover it is not essential to display a graphical tile at the location in the explorer graphic where non-displayed results exist: the "parent" graphical tile whose selection produced the non-displayed results could be marked with a display indication (icon, symbol, highlighting, and so forth) to signal the fact that non-displayed "child" results exist.

By adopting a lazy loading approach, the management device according to the present example can generate and update the explorer graphic particularly rapidly in response to user selections.

In the example according to Fig.7, the display controller 40 is configured to cache data relating to collapsed tiles (notably data relating to objects in an expanded portion that was deleted from the explorer graphic when this tile was collapsed) in the memory 45. The display controller 40 may be configured to hold the cached data for different periods of time depending on the nature of the data and/or dependent on the results-level at which the associated graphical tile was displayed. If the user chooses to re-expand a portion of the explorer graphic that was collapsed earlier, the display controller 40 is configured to restore data from the cache (if it is still present) in preference to sending a new query via the search unit 80. This further speeds up the updating of the explorer graphic.

When the display controller 40 is configured to cache data for different periods of time dependent on the nature of the data, this can permit, for example, to set a short cache period for data (such as clause status) that changes relatively frequently and to set a relatively longer cache period for data that does not change much (e.g. region, and customer). The definition of the navigation path may specify details of how to set the expiration periods of caching for the data at different results levels.

It should be mentioned that the functions of the components of the management device 100 illustrated in Fig.7 will often be implemented using appropriate functional modules implemented in software, for example software run by a processor. Accordingly, it should be understood that the relevant functions may be implemented using a greater or lesser number of modules than those shown in Fig.7 and/or the functions ascribed to specific modules in Fig.7 may be distributed differently between components. In a similar way, it will be understood that the memory 45 can be external to the management device 100.

Fig.8 illustrates a case where the management device 100a is implemented using one or more processors 110 executing instructions provided on a computer-readable storage medium 115. The computer-readable storage medium 115 comprises instructions 120 to receive user requests (e.g. requests to select a predetermined navigation path, selections of objects displayed on the explorer graphic, and so forth), instructions 130 to display first-level results of user exploration according to the selected predetermined navigation path, instructions 140 to display (i+1)th level results when the user selects an object in the i^{th} results level of the explorer graphic, and instructions 150 to query the object collection to obtain the results for the various results levels of the explorer graphic.

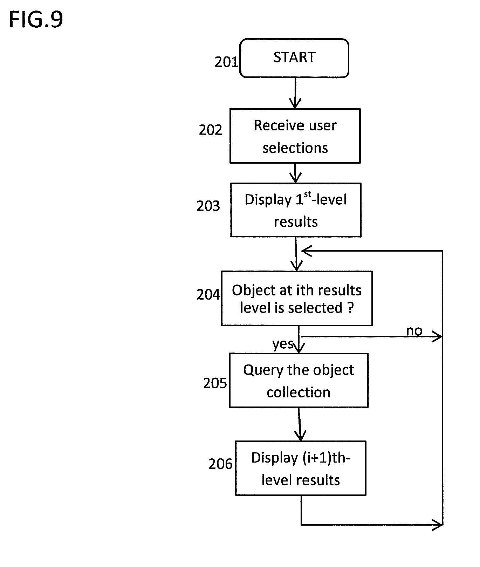

Fig.9 illustrates steps in an example method of managing a tile-based, explorer graphic for user exploration of a collection of objects.

As shown in Fig.9, at step 202 of the management method user selections are received, for example selection of a predetermined navigation path (which may, as indicated above, be by a two-stage process involving selection of the navigation path in a list and then selection of a displayed navigation path bar for the selected option, or be by a one-stage process in which selection of a predetermined navigation path causes automatic display, in the explorer graphic, of the first-level navigation results). At step 203 the first-level results are caused to be displayed by addition of a first set of graphical tiles to the explorer graphic, the first set of graphical tiles representing objects of a type defined by the selected first predetermined navigation path for a first stage of navigation.

As shown in Fig.9, at step 204 of the management method, user selection of a first object represented by a graphical tile in an i^{th} results level of the explorer graphic is detected. In response to detecting user selection of such an object, in step 205 a query is sent to the object collection looking for objects in the collection that are inter-related to the first object by a relation specified in the first predetermined navigation path for the (i+1)^{th} stage of navigation, wherein i is an integer greater than or equal to 1.

At step 206 of the management method, results obtained for the (i+1)^{th} results level by the query of step 205 are used to expand a portion of the displayed explorer graphic relating to the first object, the expansion process comprises addition to the displayed graphical navigator of a further set of graphical tiles representing objects inter-related to the first object by a relation specified in the first predetermined navigation path for the (i+1)^{th} stage of navigation, wherein i is an integer greater than or equal to 1. The further set of graphical tiles at an (i+1)^{th} results level of the explorer graphic is caused to be displayed adjacent to the graphical tile representing said first object.

Although certain examples of manager devices and methods that enable a user to explore a collection of objects have been described above, it is to be understood that changes and additions may be made to the described examples within the scope of the appended claims.

## Claims

1. A manager device (100) of a tile-based explorer graphic for user exploration of a collection of objects, wherein objects in said collection are inter-related by relations, the manager device comprising:
a user-input reception unit (50) for receiving user selections;
a display controller (40) configured:
responsive to user selection of a first predetermined navigation path, to cause display on a display device of a first results level of the explorer graphic, the first results level comprising a first set of graphical tiles representing objects of a type defined by said first predetermined navigation path for a first stage of navigation, and
responsive to user selection of a first object represented by a graphical tile in an i^{th} results level of the explorer graphic, to cause expansion of a portion of the displayed explorer graphic relating to said first object, said expansion comprising addition to the explorer graphic of a further set of graphical tiles representing objects inter-related to said first object by a relation specified in the first predetermined navigation path for the (i+1)^{th} stage of navigation, wherein i is an integer greater than or equal to 1,
wherein the display controller is configured to cause display of the further set of graphical tiles at an (i+1)^{th} results level of the explorer graphic, adjacent to the graphical tile representing said first object; and
a search unit (80) responsive to user selection of said first object to query said collection for objects inter-related to said first object by said relation specified in the first predetermined navigation path for the (i+1)^{th} stage of navigation.

2. The explorer-graphic manager device (100) according to claim 1, wherein the display controller (40) is configured, when expanding a portion of the displayed explorer graphic relating to said first object by adding graphical tiles at the (i+1)^{th} results level, to maintain display of graphical tiles, at the i^{th} results level of the explorer graphic, representing objects other than said selected first object.

3. The explorer-graphic manager device (100) according to claim 1, wherein the display controller (40) is configured to cause display on the display device, adjacent to said first set of graphical tiles, of a navigation path bar corresponding to said first predetermined navigation path.

4. The explorer-graphic manager device (100) according to claim 1, wherein the display controller (40) is configured to cause graphical tiles at different levels of the displayed explorer graphic to be displayed with different graphical effects.

5. The explorer-graphic manager device (100) according to claim 1, wherein certain objects in said collection have a dynamically-varying status and the display controller (40) is configured to cause graphical tiles representing said certain objects to be displayed at a given time with a graphical effect indicative of the status of said certain objects at the given time.

6. The explorer-graphic manager device (100) according to claim 1, wherein the display controller (40) is configured, responsive to user selection of a second object represented by a graphical tile in the i^{th} results level of the explorer graphic, to cause collapse of a portion of the displayed explorer graphic relating to said first object, said collapse comprising removal from the displayed explorer graphic of graphical tiles at levels of the graphic subsequent to the i^{th} layer and representing objects inter-related to said first object.

7. The explorer-graphic manager device (100) according to claim 6, wherein the display controller (40) is configured to accompany the collapse of the portion of the displayed explorer graphic relating to said first object by a change in the orientation of the graphical tile representing said first object.

8. The explorer-graphic manager device (100) according to claim 6, and further comprising a cache (45) configured, when graphical tiles are removed from the displayed explorer graphic, to retain for a predetermined time period data defining objects represented by the deleted graphical tiles.

9. The explorer-graphic manager device (100) according to claim 8, wherein the search unit (80) and display controller (40) are configured to expand a portion of the displayed explorer graphic relating to a first object using data retained in said cache (45), in preference to said search unit making a new query of the collection.

10. The explorer-graphic manager device (100) according to claim 8, wherein the search unit (80) is configured to transmit queries to a server (90) storing said collection of objects, said server (90) being external to the explorer-graphic manager device (100).

11. A method of managing a tile-based, explorer graphic for user exploration of a collection of objects, wherein objects in said collection are inter-related by relations, the management method comprising the steps of:
receiving user selections;
responsive to user selection of a first predetermined navigation path, causing display on a display device of a first results level of the explorer graphic, the first results level comprising a first set of graphical tiles representing objects of a type defined by said first predetermined navigation path for a first stage of navigation, and
responsive to user selection of a first object represented by a graphical tile in an i^{th} results level of the explorer graphic, causing expansion of a portion of the displayed explorer graphic relating to said first object, said expansion comprising addition to the displayed graphical navigator of a further set of graphical tiles representing objects inter-related to said first object by a relation specified in the first predetermined navigation path for the (i+1)^{th} stage of navigation, wherein i is an integer greater than or equal to 1,
wherein the further set of graphical tiles at an (i+1)^{th} results level of the explorer graphic is displayed adjacent to the graphical tile representing said first object; and
responsive to user selection of said first object, querying said collection to identify said objects inter-related to said first object by said relation specified in the first predetermined navigation path for the (i+1)^{th} stage of navigation.

12. The graphic-management method according to claim 11, wherein the step of causing addition of said further set of graphical tiles at the (i+1)th results level of the displayed explorer graphic is accompanied by a step of causing an adjustment in the dimensions of at least one graphical tile displayed in the explorer graphic at the i^{th} results level and/or at an (i-j)th results level where j is 1 or more.

13. The graphic-management method according to claim 11, wherein at least one of the step of causing display of said first set of graphical tiles and the step of causing display of said further step of graphical tiles comprises truncating results identified by the querying step and causing display of graphical tiles representing only a sub-set of objects identified by the querying step.

14. A machine-readable storage medium encoded with instructions executable by at least one processor of a management device for managing a tile-based explorer graphic for user exploration of a collection of objects, the machine-readable storage medium comprising:
instructions to receive user selections;
instructions to cause display on a display device of a first results level of the explorer graphic, responsive to user selection of a predetermined navigation path, the first results level comprising a first set of graphical tiles representing objects of a type defined by said first predetermined navigation path for a first stage of navigation;
instructions to cause expansion of a portion of the displayed explorer graphic relating to a first object, responsive to user selection of said first object represented by a graphical tile in an i^{th} results level of the explorer graphic, said expansion comprising addition to the displayed graphical navigator of a further set of graphical tiles representing objects inter-related to said first object by a relation specified in the first predetermined navigation path for the (i+1)^{th} stage of navigation, wherein i is an integer greater than or equal to 1, wherein the further set of graphical tiles at an (i+1)^{th} results level of the explorer graphic is displayed adjacent to the graphical tile representing said first object; and
instructions to query said collection, responsive to user selection of said first object, to identify said objects inter-related to said first object by said relation specified in the first predetermined navigation path for the (i+1)^{th} stage of navigation.

15. The machine-readable storage medium according to claim 14, wherein the instructions to add, to the displayed graphical navigator, a further set of graphical tiles, comprise truncation instructions to add graphical tiles representing only a sub-set of objects in said collection that are inter-related to said first object by said relation specified in the first predetermined navigation path for the (i+1)^{th} stage of navigation, and there is further provided instructions to cause display on the explorer graphic of a visual indication that the added further set of graphical tiles represents the result of truncation.
